# EUROPEAN PATENT APPLICATION

(11) **EP 1 406 455 A1**
(43) Date of publication of application: **07.04.2004**
(21) Application number: 02741436.6
(22) Date of filing: 08.07.2002
(51) Int. Cl.: H04N 11/00, H04N 9/00

(54) **VIDEO SIGNAL JUDGMENT APPARATUS AND METHOD**

(30) Priority: 10.07.2001 JP 2001208670
(71) Applicant: Sony Corporation, Tokyo 141-0001 (JP)
(72) Inventor: MORITA, Hideo, c/o Sony Corporation, Tokyo 141-0001 (JP)
(74) Representative: Nicholls, Michael John
(86) International application number: PCT/JP2002/006892
(87) International publication number: WO 2003/015422

(57) **Abstract**

The present invention relates to a video signal determining apparatus adapted to correctly detect a filmed video signal. A subtraction circuit 5 operates a difference between a color difference signal B-Y delayed one field outputted from a 1-field delay circuit 3 and a color difference signal B-Y before delay. In the case of a 4:2:0-formatted signal, the color difference signals in the corresponding positions of fields configuring the same frame are same in value. The output of the subtraction circuit 5 is 0 in the case that the input thereof is a signal of a field of the corresponding frame, and not 0 in the case that it is a signal of a field of the different frame. An addition circuit 6 cumulatively adds together, over one field, the output of the subtraction circuit 5. A comparator circuit 7 outputs 1 in the case that the addition value is greater than a reference value, and 0 in the case smaller than the reference value. A controller 8 determines whether the inputted signal is a filmed video signal or not, from a pattern of 1 and 0 outputted from the comparator circuit 7. The present invention can be applied to a DVD player.

## Description

### TECHNICAL FIELD

The present invention relates to an apparatus and method for determining a video signal, and more particularly to an apparatus and method for determining a video signal which is adapted to positively determine whether a filmed video signal or not by a simple configuration.

### BACKGROUND ART

In order to view a video signal in a state with less flicker, recently it is an often practice to convert an interlace video signal into a progressive video signal.

The video signal of an NTSC scheme is configured with 60 fields (30 frames) per second. On the contrary, the signal taken a picture by a movie film has frames per second in the number of 24 frames. Accordingly, in the case of converting a movie image into an NTSC video signal, conversion process is done under a 3-2 pull-down scheme. Where this conversion process is carried out, the images of the same frame are placed over the successive two fields while the same images in the next frame are placed over the following successive three fields. As a result, it is possible to assign 24 frames of images onto 60 fields.

In this manner, in the filmed video signal made by 3-2 pull-down conversion, the video signals in the first and third fields of the successive three fields are quite of the same video signal. When converting an interlace video signal into a progressive video signal, in the case the same video signal has been already coded, the video signal to second appear can be omitted in processing. Consequently, in the case whether a filmed video signal or not is previously known, coding is possible with further efficiency.

Consequently, there is disclosed a method for determining whether a filmed video signal processed by 3-2 pull-down conversion or not, e.g. in U.S. Pat. No. 4,982,280.

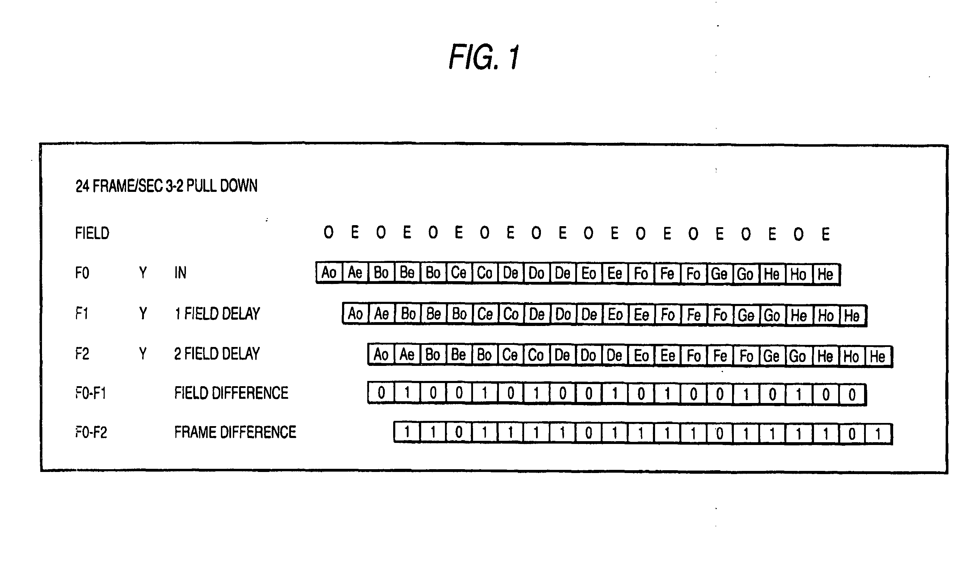

Fig. 1 represents the principle of a scheme proposed in the U.S. Patent. As shown in the figure, the video signal is a signal that odd (O) and even (E) fields appear alternately. In the case of a video signal processed by 3-2 pull-down conversion, the image in the first frame A (luminance signal) is given a video signal having two fields of an odd field Ao and an even field Ae.

The image in the next frame B is placed over three fields of an odd field, an even field and further the next odd field. Namely, the first field is as an odd field Bo, the next field as an even field Be and the third field as an odd field Bo. Consequently, of the three fields, the first odd field Bo and the third odd field Bo are quite of the same signals.

Subsequently, the framed video signal of the film, including frame C, frame D, frame E and frame F, is similarly assigned to the fields of the video signal.

Now provided that, of the luminance signal, the original signal not delayed is taken F0, the original signal F0 is delayed in an amount of one field into a signal F1. This signal F1 is further delayed in an amount of one field into a signal F2.

As for the value of a frame difference F0-F2 obtained by subtracting the signal F2 from the signal F0, assuming that 1 is outputted for a subtraction case of the difference fields of color difference signals, and 0 is outputted for a subtraction case of the same fields of color difference signals, then the signals F0 and F2 become the same in value at Bo, De, Fo, He ... once in each field with a period taken with five fields, as shown in Fig. 1. As a result, the value of F0-F2 assumes 1101111011110 ... with a delay of one field. Namely, the value becomes 0 once per period with a period taken with five fields.

On the contrary, in the case of a usual NTSC video signal instead of the video signal made by 3-2 pull-down conversion, the frame difference is given as 11111111 ...

Accordingly, whether a filmed video signal or not can be determined from a pattern difference of the frame difference.

In the meanwhile, in the case of a PAL scheme, 25 frames (50 fields) constitute one second. In the case of converting a filmed image into a PAL video signal, 2-2 pull-down conversion is made increasing a rate by 4%.

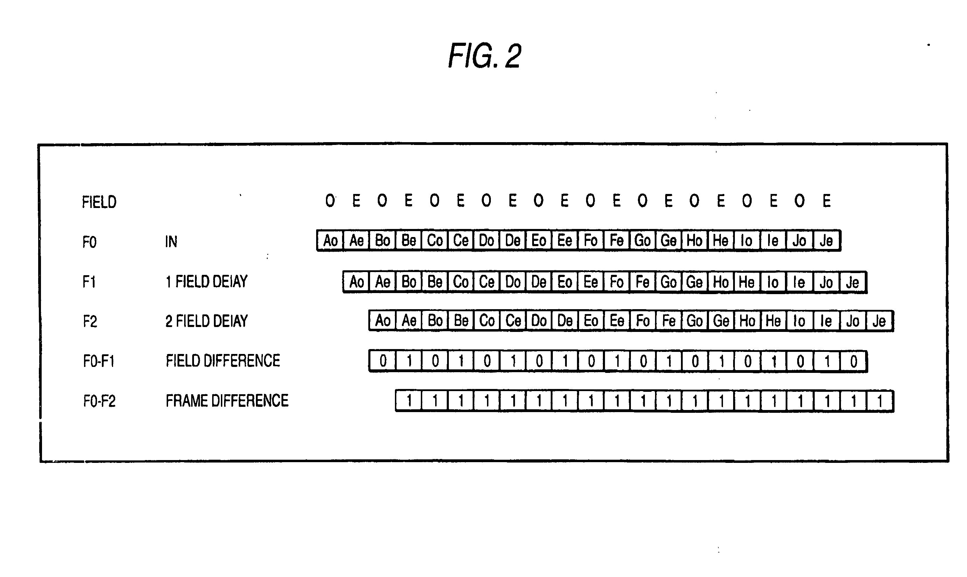

Fig. 2 shows the difference F0-F1 and the difference F0-F2 during the 2-2 pull-down conversion.

The value of F0-F2 assumes as Bo-Ao, Be-Ae, Co-Bo, Ce-Be, ... Because of a difference of signals in the different frames, the difference value thereof increases as 11111...

Meanwhile, the value of F0-F1 assumes as Ae-Ao, Bo-Ae, Be-Bo, Co-Be, ... Thus, the field difference of the same frame is operated every other field. Accordingly, obtained is a pattern 010101 ...

Contrary to this, in the case of a usual PAL video signal (in the case of a video signal not 2-2-pull-down-processed), F0-F1 and F0-F2 each have a value of 11111 ... Accordingly, whether a video signal 2-2-pull-down-converted or not can be determined based upon F0-F1.

In the meanwhile, as shown in Fig. 2, the fact that the field difference during 2-2 pull-down conversion takes a pattern of 01010101 ...is premised on the high correlativeness of the images of odd and even fields produced from the same frame.

However, there is a case, for example, that an image having, particularly, a vertically high frequency component exists in the video signal. Such an image is, particularly, frequent in an image outputted by a progressive camera or an image due to computer graphics. Such an image, even if it is an image of odd and even fields produced from the same frame, is possibly low in correlativeness. For example, it is well known that, for example, the image having fine, horizontal stripes has a low correlativeness on the two fields of odd and even fields.

For this reason, it is a conventional practice to set at a small value a determination threshold for detecting a 2-2-pull-down-converted video signal. However, if doing so, a pattern 101010 ... appears in the case with a usual video signal. In conclusion, there is a problem that it is impossible to make a correct detection as a 2-2-pull-down-converted signal.

### DISCLOSURE OF THE INVENTION

The present invention has been made in view of such situations, which aims at correctly detecting a filmed video signal even unless there is correlation between odd and even field images produced from the same frame.

An apparatus for determining a video signal of the invention, comprises: delay means for delaying by one field a color difference signal configured including a same value of pixels on upper and lower lines; operation means for operating a difference between the color difference signal and the color difference signal delayed one field by the delay means; addition means for cumulatively adding together, over one field, the difference operated by the operation means; and determination means for comparing a signal obtained through addition by the addition means with a predetermined reference value, to determine whether a filmed video signal or not. By this configuration, a signal can be detected correctly whether it is a film video signal or not, without being influenced by correlation between odd and even field images.

The color difference signal can be one of color difference signals compressed in a 4:2:0 format.

A method for determining a video signal of the invention, comprises: a delay step of delaying by one field a color difference signal; an operation step of operating a difference between the color difference signal and the color difference signal delayed one field by a process of the delay step; an addition step of cumulatively adding together, over one field, the difference operated by a process of the operation step; and a determination step of comparing a signal obtained through addition by a process of the addition step with a predetermined reference value, to determine whether a filmed video signal or not.

A program of a recording medium of the invention comprises: a delay step of delaying by one field a color difference signal; an operation step of operating a difference between the color difference signal and the color difference signal delayed one field by a process of the delay step; an addition step of cumulatively adding together, over one field, the difference operated by a process of the operation step; and a determination step of comparing a signal obtained through addition by a process of the addition step with a predetermined reference value, to determine whether a filmed video signal or not.

A program of the invention is for a computer to execute, which comprises: a delay step of delaying by one field a color difference signal; an operation step of operating a difference between the color difference signal and the color difference signal delayed one field by a process of the delay step; an addition step of cumulatively adding together, over one field, the difference operated by a process of the operation step; and a determination step of comparing a signal obtained through addition by a process of the addition step with a predetermined reference value, to determine whether a filmed video signal or not.

In the invention, whether a filmed video signal or not is determined by cumulating, over one field, the difference between a color difference signal delayed one field and a color difference signal not delayed.

### BRIEF DESCRIPTION OF THE DRAWINGS

Fig. 1 is a figure explaining the principle of detection under a conventional 3-2 pull-down scheme.
Fig. 2 is a figure explaining the principle of detection under a conventional 2-2 pull-down scheme.
Fig. 3 is a block diagram showing a configuration of a DVD player to which the present invention is applied.
Fig. 4A is a figure explaining a 4:2:0 format.
Fig. 4B is a figure explaining a 4:2:0 format.
Fig. 4C is a figure explaining a 4:2:0 format.
Fig. 5 is a flowchart explaining a filmed-video-signal determining process of the invention.
Fig. 6 is a figure explaining the principle of detecting a video signal by 3-2 pull-down of the invention.
Fig. 7 is a figure explaining the principle of detecting a usual motion-image video signal.
Fig. 8 is a figure explaining the principle of detecting a usual still-image video signal.
Fig. 9 is a figure explaining the principle of detecting a video signal under 2-2 pull-down scheme of the invention.
Fig. 10 is a figure explaining the principle of progressive signal conversion of the invention.
Fig. 11 is a timing chart explaining the writing and reading of a time-based compression circuit in the DVD player of Fig. 3.
Fig. 12 is a timing chart showing by magnification a part of time period T1 in Fig. 11.
Fig. 13 is a timing chart showing by magnification a part of time period T2 in Fig. 11.
Fig. 14 is a timing chart showing by magnification a part of time period T3 in Fig. 11.
Fig. 15 is a block diagram showing a configuration example of a computer to which the invention is applied.

### BEST MODE FOR CARRYING OUT THE INVENTION

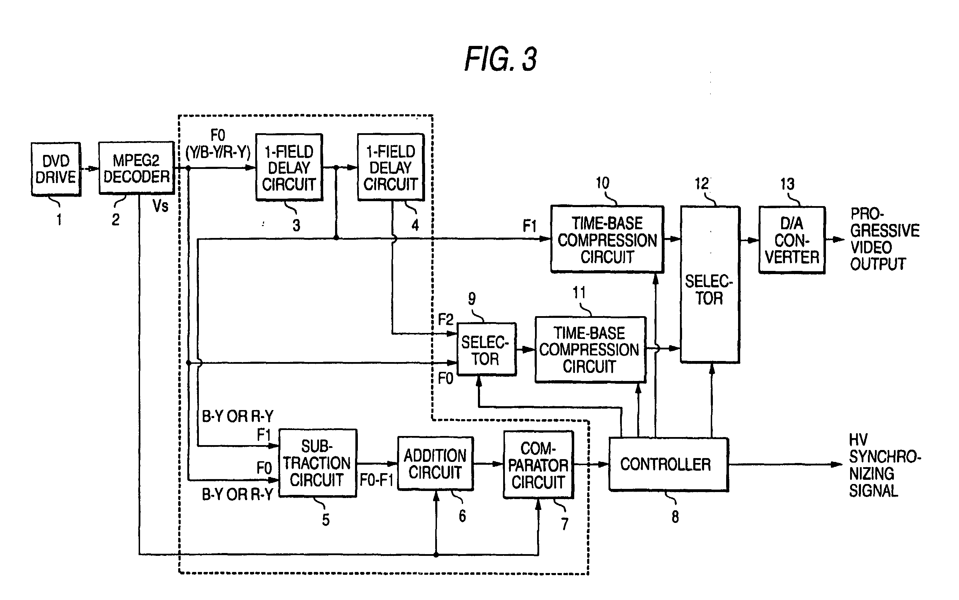

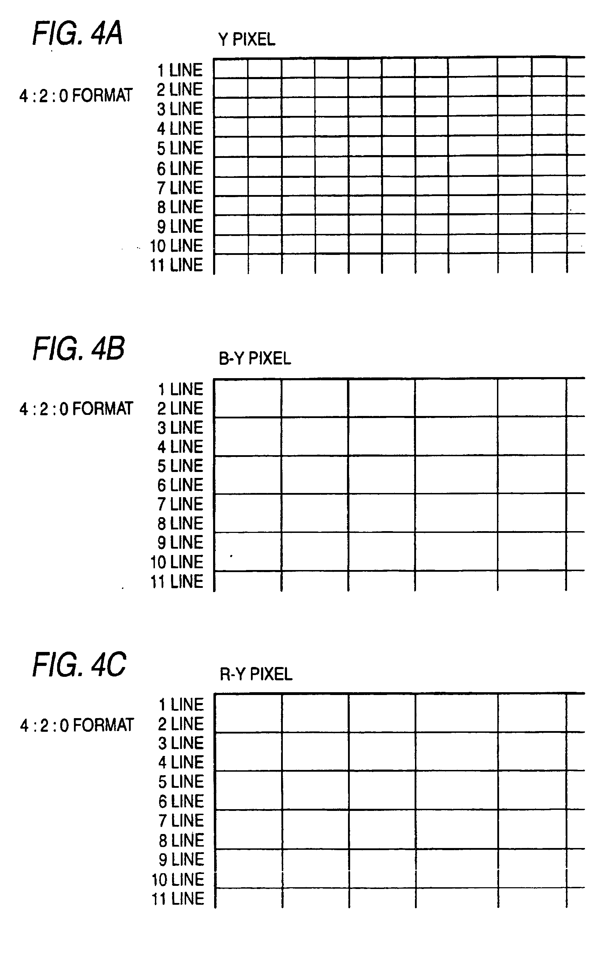

Fig. 3 represents a configuration example of a DVD player to which a filmed video-signal determining apparatus of the present invention is applied. In this configuration example, a DVD (Digital Versatile Disc) , not shown, is to be reproduced by a DVD drive 1. This DVD records a video signal in an interlace scheme having a 4:2:0 format. Figs. 4A to 4C are figures explaining the 4:2:0 format.

In the case of this format, the luminance signal has predetermined values respectively on one pixels, as shown in Fig. 4A. On the contrary, the color difference signal B-Y and the color difference signal R-Y have the same values on four pixels of 2 × 2, as respectively shown in Figs. 4B and 4C.

The video signal reproduced from the DVD by a DVD drive 1 is supplied to and decoded by an MPEG2 (Moving Picture Expert Group) decoder 2. Of the signals decoded by the MPEG decoder 2, a vertical synchronizing signal Vs is supplied to an addition circuit 6 and comparator circuit 7. The luminance signal Y and the color difference signals B-Y, R-Y are respectively supplied to a 1-field delay circuit 3 of a detection circuit 21. The 1-field delay circuit 3 delays the input signal by one field and then further supplies it to a 1-field delay circuit 4 in the rear stage. The signal outputted by 'the 1-field delay circuit 3 is also supplied to a subtraction circuit 5 and time-base compression circuit 10.

The 1-field delay circuit 4 delays, by further one field, the signal inputted from the 1-field delay circuit 3 and then output it to a selector 9. To the selector 9 are also supplied the luminance signal Y, not delayed, outputted from the MPEG2 decoder 2 and the color difference signals B-Y, R-Y.

The subtraction circuit 5 operates a difference between the color difference signal B-Y or R-Y of the signal F0, not delayed, outputted from the MPEG2 decoder 2, and the color difference signal B-Y or R-Y of the video signal F1, delayed by one field, outputted from the 1-field delay circuit 3.

The output from the subtraction circuit 5 is supplied to the addition circuit 6, where the output values are cumulatively added together based on each field. The value outputted from the addition circuit 6 is supplied to a comparator circuit 7, and compared with a predetermined value previously set for each field.

The output of the comparator circuit 7 is supplied to a controller 8. The controller 8 determines from the output of the comparator circuit 7 whether the video signal being currently inputted is a filmed video signal or not, according to the sequence thereof.

Then, the controller 8 controls a selector 9, to select one of the field signal F0, not delayed, outputted from the MPEG2 decoder 2 and the signal F2 ultimately delayed two fields relative to the signal F0 by 1-field delay circuit 4, and outputs it to the time-base compression circuit 11. Namely, with reference to the signal F1 delayed one field outputted from the 1-field delay circuit 3, the controller 8 selects closer one to the signal F1 of the signals F0 and F2 in the preceding and succeeding fields thereto.

The time-base compression circuit 10 times-speed-converts the signal F1 delayed one field outputted from the 1-field delay circuit 3 by time-base compression, and outputs it to the selector 12. The time-base compression circuit 11 also times-speed-converts the signal inputted from the selector 9 by time-base compression, and outputs it to the selector 12. Under control of the controller 8, the selector 12 selects either one of the signals inputted from the time-base compression circuit 10 or the time-base compression circuit 11, and outputs it to a D/A converter A13. The D/A converter A13 D/A-converts the input signal and outputs it as a progressive video signal. Incidentally, the controller 8 generates and outputs a horizontal synchronizing signal and a vertical synchronizing signal as well.

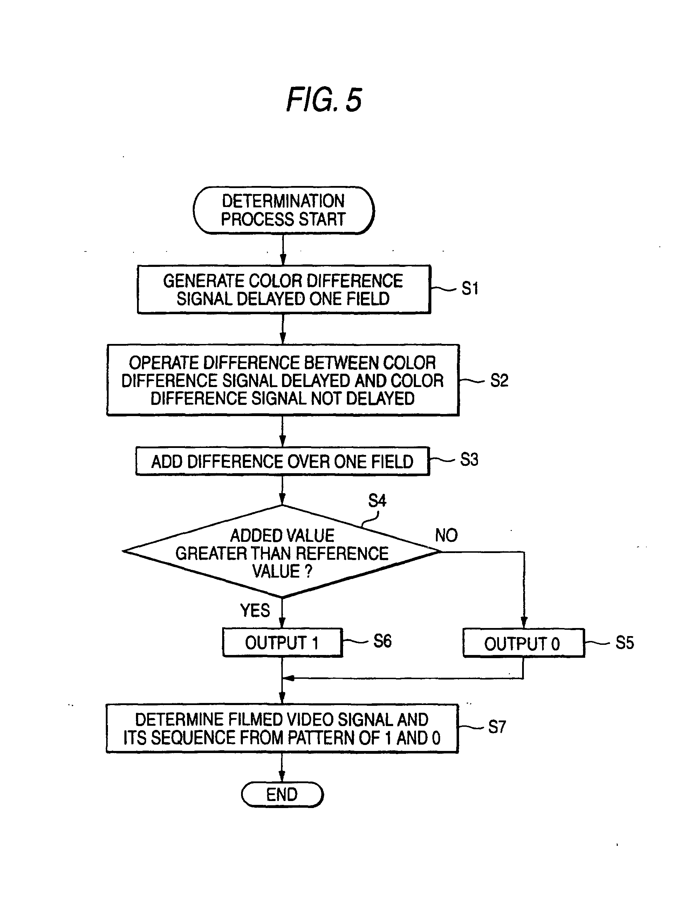

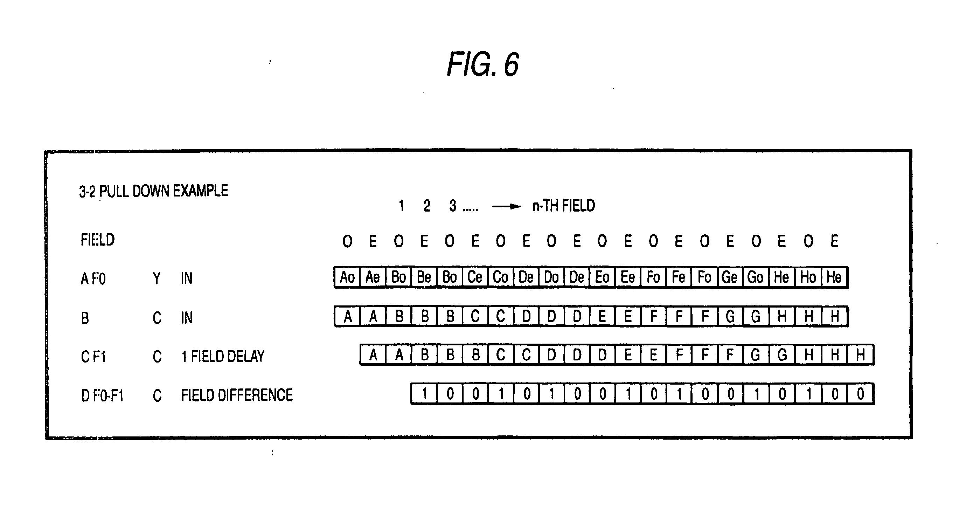

Now, the operation of the DVD player of Fig. 3 is explained with reference to a flowchart of Fig. 5. Meanwhile, Fig. 6 is a figure explaining the principle of 3-2 pull-down detection in the present invention. Explanation is made by referring to the Fig. 6 as required.

Instructed for reproduction, the DVD drive 1 reproduces the DVD loaded thereon and outputs a video signal thereof. The MPEG2 decoder 2 decodes the video signal inputted from the DVD drive 1 by an MPEG scheme, and outputs a luminance signal Y, a color difference signal B-Y and a color difference signal R-Y respectively to the 1-field delay circuit 3 and the selector 9. Also, the color difference signal B-Y or R-Y only is inputted to the subtraction circuit 5.

Herein, the video signal being reproduced and outputted by the DVD drive 1 is a signal in a 4:2:0 format, as shown in Figs. 4A - 4C. In the case of this format, the color difference signal B-Y corresponding to the first line (color difference signal B-Y in the odd field) and the color difference signal B-Y corresponding to the second line (color difference signal B-Y in the even field) for example, in Fig. 4A, have the same value.

The 1-field delay circuit 3, in step S1, delays by one field the inputted color difference signal B-Y or R-Y, and output it to the subtraction circuit 5.

The subtraction circuit 5, in step S2, inputs therein the color difference signal (B in Fig. 6) of among the signal F0, not delayed, outputted from the MPEG2 decoder 2, and the color difference signal (C in Fig. 6) of the signal F1, delayed one field, outputted from the 1-field delay circuit 3, thereby operating F0-F1 (D in Fig. 6). In the F0-F1 subtraction, provided that the signals are of the corresponding same frames, 0 is assumably outputted without exception whereas, provided that the signals are of the different frames, 1 is outputted.

In step S3, the difference signal outputted from the subtraction circuit 5 (D in Fig. 6) is outputted to the addition circuit 6, and added with a value in an amount of one field. The comparator circuit 7, instep S4, compares between the addition value in an amount of one field supplied from the addition circuit 6 and a reference value previously set. This reference value is set at an intermediate value of the maximum and minimum values of cumulated difference values.

The comparator circuit 7, in the case the addition value is greater than the reference value, proceeds to step S6 and outputs logic 1. In the case the addition value is not greater than the reference value, it proceeds to step S5 and outputs logic 0. Incidentally, because of the necessity of an addition in an amount of one field, the comparator circuit 7 has an output (D in Fig. 6) delayed by an amount of one field.

In Fig. 6, in the first field, the color difference signal F0 not delayed (B in Fig. 6) has a value B while the color difference signal F1 delayed one field (C in Fig. 6) has a value A. Thus, these values are different throughout one field. In this case, in step S2, 1 is outputted from the subtraction circuit 5 and, in step S3, a value in an amount of one field is added by the addition circuit 6. In the timing of the second field (with one field delay) , the comparator circuit 7 in step S4 compares between the addition value in an amount of one field supplied from the adder 6 and a predetermined reference value, thus outputting 1 from the comparator circuit 7 (D in Fig. 6).

Meanwhile, in the second field, the values of the non-delayed color difference signal F0 (B in Fig. 6) and the color difference signal F1 delayed one field (C in Fig. 6) are both B, the both being the same. In this case; in step S2, 0 is outputted from the subtraction circuit 5, and in step S3, a value in an amount of one field is added by the addition circuit 6. In the timing of the third field (with one field delay), in step S4, the comparator circuit 7 compares between the addition value in an amount of one field supplied from the adder 6 and a predetermined reference value, outputting 0 from the comparator circuit 7 (D in Fig. 6).

The controller 8 in step S7 determines from the patterns (D in Fig. 6) of logic 1 and logic 0 outputted from the comparator circuit 7 whether the video signal being currently reproduced and outputted by the DVD 1 is a filmed video signal or not.

Accordingly, as shown at D in Fig. 6, the pattern of a field difference outputted by the comparator circuit 7 is given as 10010100101 ... for the case of a video signal in a 3-2 pull-down scheme. In this manner, determination is possible as a filmed video signal and its sequence (phase).

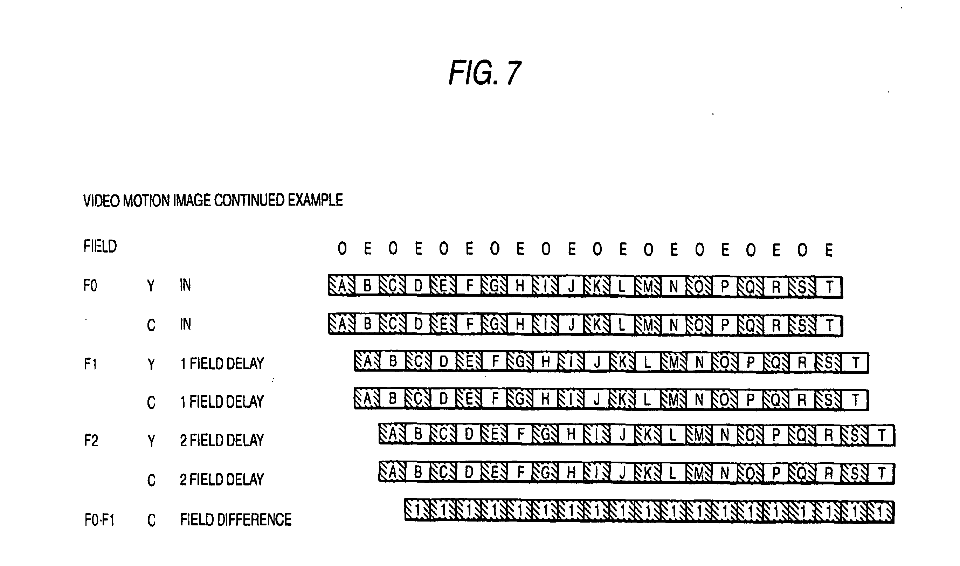

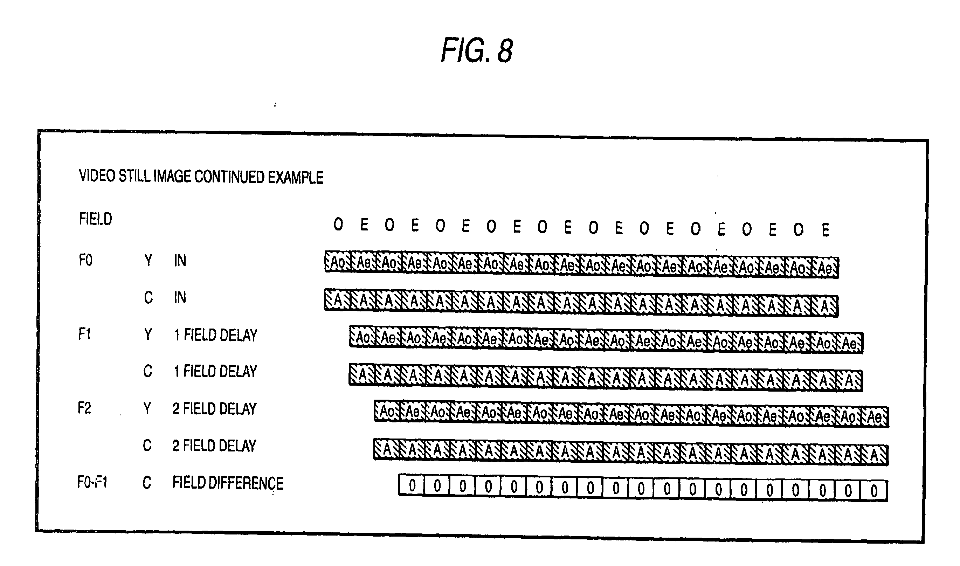

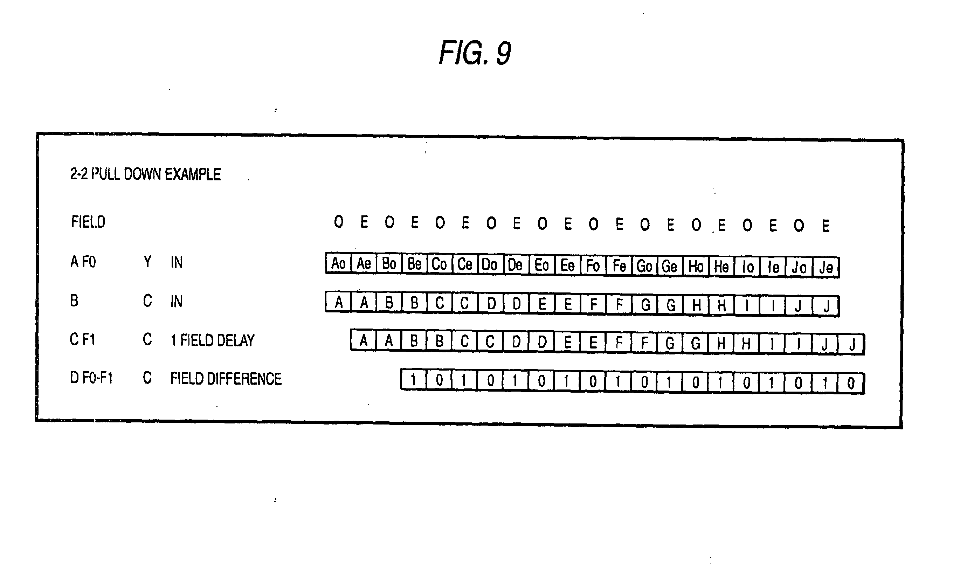

Fig. 7 is a figure explaining the principle of detecting a video signal of the usual motion image, Fig. 8 is a figure explaining the principle of detecting a video signal of the usual still image, and Fig. 9 is a figure explaining the principle of detecting a video signal in a 2-2 pull-down scheme in the invention. In the case of such a usual video signal, because, if a moving image, coding is done on a field-by-field basis, the pattern of F0-F1 is as 111111 ... as shown in Fig. 7. If a still image, because coding is done on a frame-by-frame basis, it is as 00000 ... as shown in Fig. 8. Accordingly, from a difference of the patterns, it can be determined whether a filmed video signal or a usual video signal.

Incidentally, in the case of a 2-2 pull-down schemed video signal, the pattern of F0-F1 is given as 10101010 ... as shown in Fig. 9. The prior art is premised on that the images in odd and even fields produced from the same frame have a high correlativity. However, the present embodiment, because utilizing the fact the video signal is recorded in a 4:2:0 format, can make a determination even where there is no correlativity in the images.

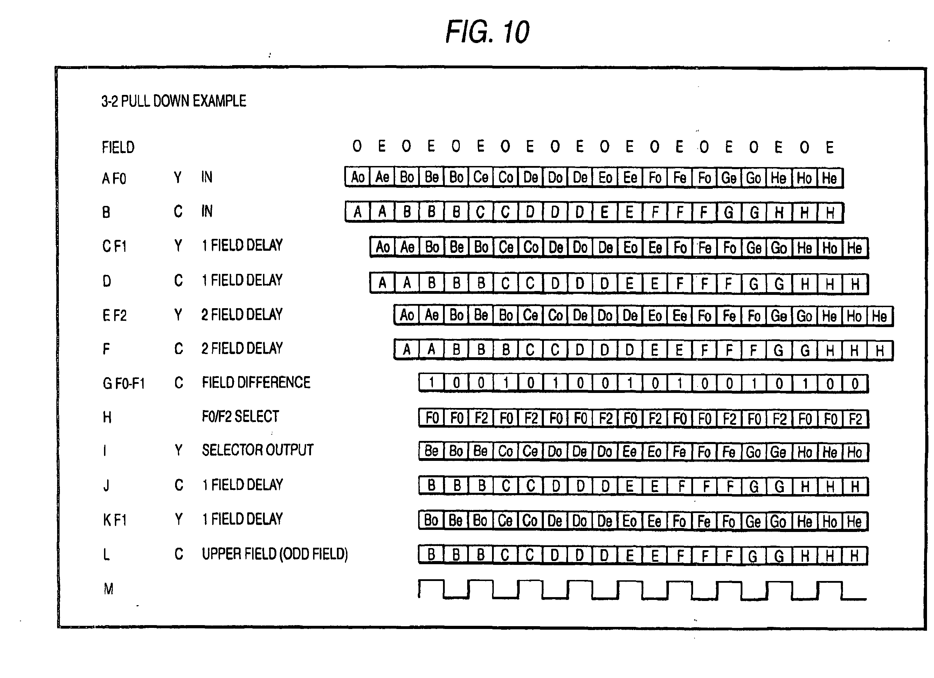

Fig. 10 is a figure explaining the principle of progressive signal conversion in the invention. Figs. 10A, 10B, 10D and 10G are respectively the same as Figs. 6A, 6B, 6C and 6D. In Fig. 3, the selector 9 is under control of the controller 8, to select the signal F2 delayed two fields outputted from the 1-field delay circuit 4, at a rate of once per two fields following once per three fields, as shown in Fig. 10H. The selector 9, in the other occasions, selects the non-delayed signal F0.

The signal outputted from the selector 9 is supplied to the time-base compression circuit 11 in order for conversion into the progressive scheme, and times-speed-converted by time-base compression. The time-base compression circuit 10 times-speed-converts the signal F1 delayed one field outputted from the 1-field delay circuit 3 by time-base compression.

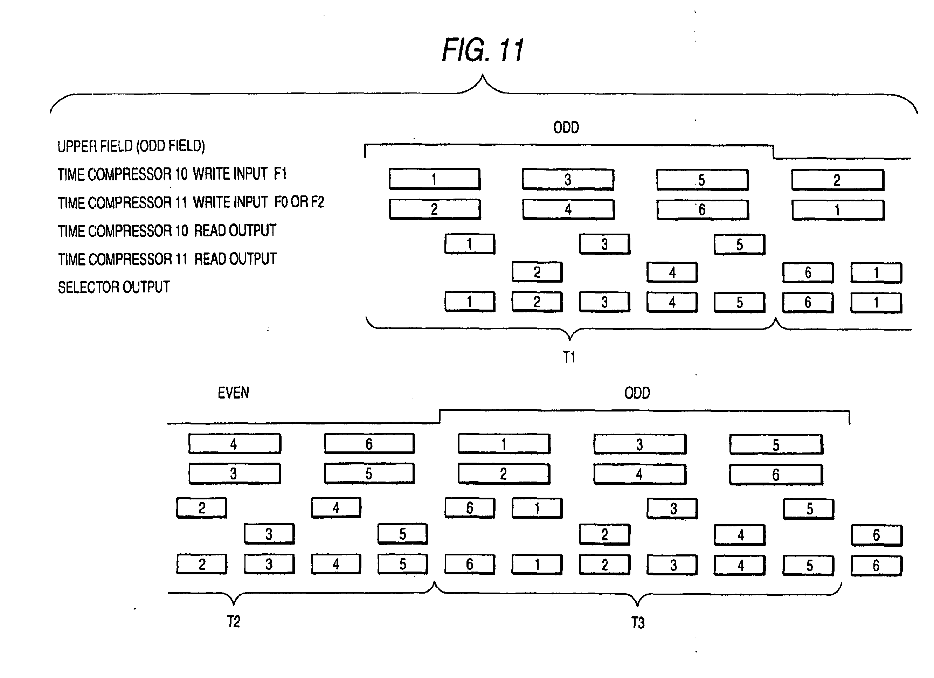

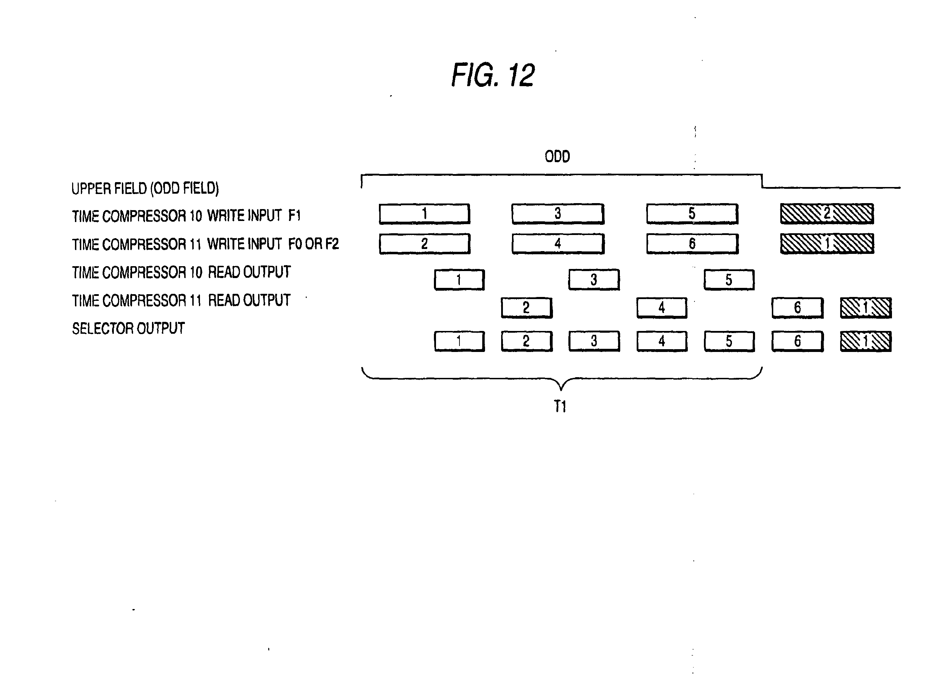

In Fig. 11 is shown the timing of input and output in the time-base compression circuit 10 and time-base compression circuit 11. Incidentally, Figs. 12, 13 and 14 respectively show by magnification the parts of time periods T1 to T3 of Fig. 11.

Incidentally, it is assumed that, in these figures, the field is constituted with six lines for explanatory convenience.

As a result that the selector 9 selects a signal in a field F0 or Field F2 as shown in Fig. 10H, of among the output the luminance signal is as shown in Fig. 10I while the color difference signal is as a signal as shown in Fig. 10J.

The time-base compression circuit 10, in an odd-field time period T1 shown in Figs. 11 and 12, writes the first-lined data of the signal F1 outputted from the 1-field delay circuit 3 and time-base-compresses and outputs it to the selector 12. The time-base compression circuit 11 compresses the second-lined data supplied from the selector 9 and, outputs it to the selector 12 after the time-base compression circuit 10 outputs the first-lined data.

Similarly in the subsequent, the time-base compression circuit 10 compresses and outputs the third-lined and fifth-lined data in the order while the time-base compression circuit 11 compresses and outputs the fourth-lined and sixth-lined data in the order.

The selector 12 alternately selects the data on the lines outputted from the time-base compression circuit 10 and time-base compression circuit 11, thereby outputting those to the D/A converter 13 in the order of first line, second line, third line, fourth line, fifth line and sixth line. The D/A converter 13 D/A converts and outputs the input data.

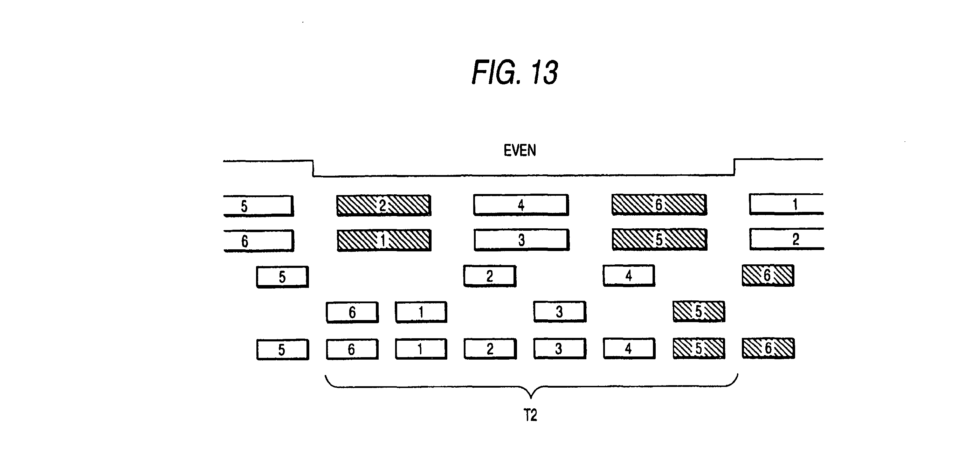

As shown in Figs. 11 and 13, in an even-field time period T2, the time-base compression circuit 10 compresses and outputs the data on the second line, the fourth line and the sixth line in the order while the time-base compression circuit 11 compresses and outputs the data on the first line, the third line and the fifth line in the order.

The selector 12, in also this case, alternately selects the outputs of the time-base compression circuit 10 and time-base compression circuit 11, thereby selecting and outputting the first-lined to six-lined data in the order.

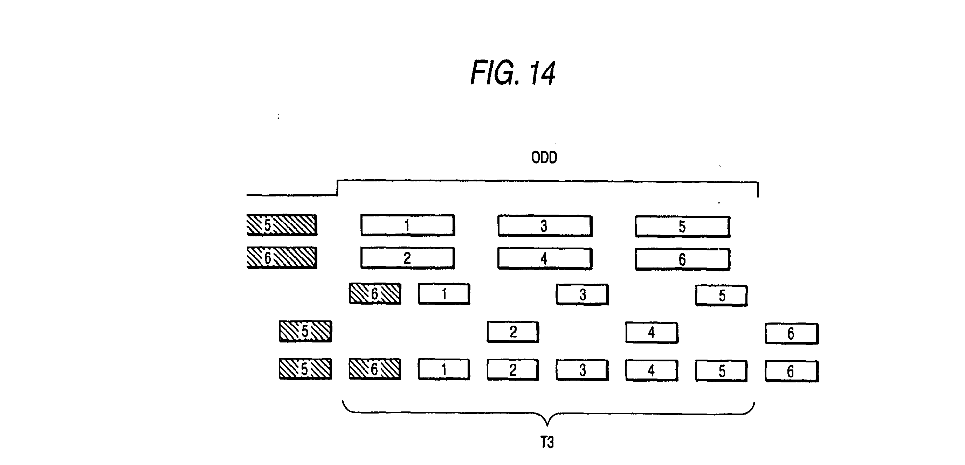

In an odd-field time period T3 shown in Figs. 11 and 14, similar process is executed to the case in the time period T1.

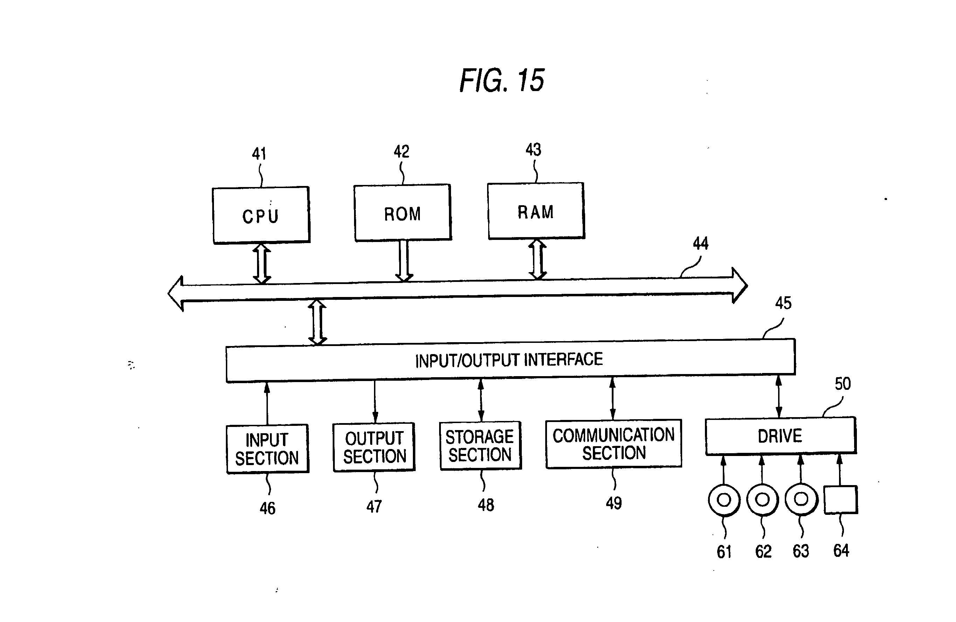

The above series of processes, although can be executed over hardware, can be carried out on software. In this case, the DVD player, for example, is configured by a computer as shown in Fig. 15.

The computer shown in Fig. 15 has, at least, a CPU (Central Processing Unit) 41, a ROM (Read Only Memory) 42, a RAM (Random Access Memory) 43 and a drive 50. The CPU 41 executes various processes according to the program stored in the ROM 42 or the program loaded on the RAM 43 from a storage section 48. The RAM 43 properly stores the data required for the CPU 41 to execute various programs.

The CPU 41, the ROM 42 and the RAM 43 are mutually connected through a bus 44. This bus 44 is also connected with an input/output interface 45.

The input/output interface 45 is connected with an input section 46 configured by a keyboard, a mouse and the like, an output section 47 configured by a display of a CRT, LCD or the like and a speaker, a storage section 48 configured by a hard disc, a communicating section 49 configured by a modem, terminal adapter or the like. The communicating section 49 is to carry out a communication process through a network including the Internet.

The input/output interface 45 is also connected with a drive 50 as required, to suitably load thereon a magnetic disc 61, an optical disc 62, a magneto-optical disc 63, a semiconductor memory 64 or the like. The computer programs read from those are installed to the storage section 48, as required.

In the case of carrying out the above series of processes on software, the program configuring the software is installed from a network or recording medium onto a computer built in the exclusive hardware or, for example, a general-purpose personal computer capable of executing various functions by installing various programs.

As shown in Fig. 15, this recording medium is structured by a program-recorded package media separately from an apparatus main body, such as a magnetic disc 61 (including a floppy disk), an optical disk 62 (CD-ROM (including a Compact Disk-Read Only Memory) and a DVD (Digital Versatile Disk)), a magneto-optical disk 63 (including MD (Mini-disk)), a semiconductor memory 64 or the like, to be distributed for providing the user with a program, as well as structured by a ROM 42 recording a program or a hard disk included in the storage section 48 that is to be provided to the user in a state previously built in the apparatus main body.

Incidentally, in the present specification, the steps describing a program recorded on the recording medium include, of course, a process to be chronologically along the described sequence, also including a process to be executed in parallel or individually instead of not necessarily processed chronologically.

Meanwhile, in the present specification, the system represents an apparatus overall configured by a plurality of devices.

Incidentally, it is needless to say that the video signal determining device of the invention is applicable not only to a DVD player but also to a digital broadcast receiver for receiving a digital broadcast compression-coded by MPEG 2.

### INDUSTRIAL APPLICABILITY

As in the above, according to an apparatus and method for determining a video signal of the invention, because whether a filmed video signal or not is to be determined on the basis of a color difference signal, positive determination is possible to carry out.

## Claims

1. An apparatus for determining a video signal, comprising:
delay means for delaying by one field a color difference signal configured including a same pixel at least in an odd field and an even field corresponding to the odd field;
operation means for operating a difference between the color difference signal and the color difference signal delayed one field by the delay means;
addition means for cumulatively adding together, over one field, the difference operated by the operation means; and
determination means for comparing a signal obtained through addition by the addition means with a predetermined reference value, to determine whether a filmed video signal or not.

2. An apparatus for determining a video signal according to claim 1, wherein the color difference signal is one of color difference signals compressed in a 4:2:0 format.

3. A method for determining a video signal, comprising:
a delay step of delaying by one field a color difference signal configured including a same pixel at least in an odd field and an even field corresponding to the odd field;
an operation step of operating a difference between the color difference signal and the color difference signal delayed one field by a process of the delay step;
an addition step of cumulatively adding together, over one field, the difference operated by a process of the operation step;
a determination step of comparing a signal obtained through addition by a process of the addition step with a predetermined reference value, to determine whether a filmed video signal or not.

4. A method for determining a video signal according to claim 3, wherein the color difference signal is one of color difference signals compressed in a 4:2:0 format.

5. A recording medium recording a program for a computer to read, comprising:
a delay step of delaying by one field a color difference signal configured including a same pixel at least in an odd field and an even field corresponding to the odd field;
an operation step of operating a difference between the color difference signal and the color difference signal delayed one field by a process of the delay step;
an addition step of cumulatively adding together, over one field, the difference operated by a process of the operation step;
a determination step of comparing a signal obtained through addition by a process of the addition step with a predetermined reference value, to determine whether a filmed video signal or not.

6. A recording medium according to claim 5, wherein the color difference signal is one of color difference signals compressed in a 4:2:0 format.

7. A program for a computer to execute, comprising:
a first delay step of delaying by one field a color difference signal configured including a same pixel at least in an odd field and an even field corresponding to the odd field;
an operation step of operating a difference between the color difference signal and the color difference signal delayed one field by a process of the first delay step;
an addition step of cumulatively adding together, over one field, the difference operated by a process of the operation step;
a determination step of comparing a signal obtained through addition by a process of the addition step with a predetermined reference value, to determine whether a filmed video signal or not.

8. A program according to claim 7, wherein the color difference signal is one of color difference signals compressed in a 4:2:0 format.

## Amended claims

### Amended claims under Art. 19.1 PCT

**1.** (Amended) An apparatus for determining a video signal, comprising:
delay means for delaying by one field a color difference signal configured including pixels of a same value at least on an odd scanning line and an even scanning line;
operation means for operating a difference between the color difference signal and the color difference signal delayed one field by the delay means;
addition means for cumulatively adding together, over one field, the difference operated by the operation means;
comparator means for comparing a signal obtained through addition by the addition means with a predetermined reference value, to output a code 1 in the case that the signal is greater than the reference value and a code 0 in the case smaller than the reference value; and
determination means for determining whether a filmed video signal or not, depending upon a code string having codes obtained by the comparator means arranged in order over a plurality of fields.

**2.** An apparatus for determining a video signal according to claim 1, wherein the color difference signal is one of color difference signals compressed in a 4:2:0 format.

**3.** (Amended) A method for determining a video signal, comprising:
a delay step of delaying by one field a color difference signal configured including pixels of a same value at least on an odd scanning line and an even scanning line;
an operation step of operating a difference between the color difference signal and the color difference signal delayed one field by a process of the delay step;
an addition step of cumulatively adding together, over one field, the difference operated by a process of the operation step; and
a comparator step of comparing a signal obtained through addition by a process of the addition step with a predetermined reference value, to output a code 1 in the case that the signal is greater than the reference value and a code 0 in the case smaller than the reference value; and
determination means for determining whether a filmed video signal or not, depending upon a code string having codes obtained by a process of the comparator step arranged in order over a plurality of fields.

**4.** A method for determining a video signal according to claim 3, wherein the color difference signal is one of color difference signals compressed in a 4:2:0 format.

**5.** (Amended) A recording medium recording a program for a computer to read, comprising:
a delay step of delaying by one field a color difference signal configured including pixels of a same value at least on an odd scanning line and an even scanning line;
an operation step of operating a difference between the color difference signal and the color difference signal delayed one field by a process of the delay step;
an addition step of cumulatively adding together, over one field, the difference operated by a process of the operation step;
a comparator step of comparing a signal obtained through addition by a process of the addition step with a predetermined reference value, to output a code 1 in the case that the signal is greater than the reference value and a code 0 in the case smaller than the reference value; and
a determination step of determining whether a filmed video signal or not, depending upon a code string having codes obtained by a process of the comparator step arranged in order over a plurality of fields.

**6.** A recording medium according to claim 5, wherein the color difference signal is one of color difference signals compressed in a 4:2:0 format.

**7.** (Amended) A program for a computer to execute, comprising:
a first delay step of delaying by one field a color difference signal configured including pixels of a same value at least on an odd scanning line and an even scanning line;
an operation step of operating a difference between the color difference signal and the color difference signal delayed one field by a process of the first delay step;
an addition step of cumulatively adding together, over one field, the difference operated by a process of the operation step;
a comparator step of comparing a signal obtained through addition by a process of the addition step with a predetermined reference value, to output a code 1 in the case that the signal is greater than the reference value and a code 0 in the case smaller than the reference value; and
a determination step of determining whether a filmed video signal or not, depending upon a code string having codes obtained by a process of the comparator step arranged in order over a plurality of fields.

**8.** A program according to claim 7, wherein the color difference signal is one of color difference signals compressed in a 4:2:0 format.
